# EUROPEAN PATENT APPLICATION

(11) **EP 4 484 340 A1**
(43) Date of publication of application: **01.01.2025**
(21) Application number: 22937327.9
(22) Date of filing: 11.04.2022
(51) Int. Cl.: B65G 47/34, B65G 47/36, B65G 47/38

(54) **DEVICE FOR DUAL DOSING IN AN AUTOMATED OVERHEAD CONVEYOR OF THE MEAT INDUSTRY ENDING IN TWO INDEPENDENT HOOKS**

(71) Applicant: Vargas Jimenez, Daniel, 29591 Santa Rosalia Maqueda-Malaga (ES)
(72) Inventor: Vargas Jimenez, Daniel, 29591 Santa Rosalia Maqueda-Malaga (ES)
(74) Representative: Bartrina Diaz, José María
(86) International application number: PCT/ES2022/070223
(87) International publication number: WO 2023/198938

(57) **Abstract**

The present invention relates to a device for dual dosing in an automated overhead conveyor of the meat industry ending in two independent hooks, consisting of an improvement in the useful life of the dosing system located at the inlet of the conveyor, which allows hams and pigs to be easily and safely loaded on the automated conveyor two by two, applicable in the feeders or dosing system located at the inlet of a conveyor or between two consecutive conveyors.

## Description

### OBJECT OF THE INVENTION

The main object of the present invention is to provide an improvement in the feeding system tool located right at the entrance of the conveyor, which allows the hams and pigs to be comfortably and safely loaded onto the automated conveyor two by two.

It is part of the field of machinery and accessories specifically developed for the meat industry, specifically, that developed for the handling of pigs and hams, providing a new configuration of its "introducers" or feeding system to the conveyor that provides significant advantages over the state of the art.

### BACKGROUND OF THE INVENTION

As an introduction to the state of the art, it is well known that machinery designed for automated overhead transport is used in the meat industry. In the latter, the slaughter of animals must be carried out as far as possible with the animal hanging and under no circumstances should the animal come into contact with the ground.

In this regard, it is clear how overhead conveyors in the meat industry represent a significant time saver, helping to optimise space and making work easier for staff, allowing them to move the load with total comfort and without unnecessary overexertion that could lead to future injuries.

In such overhead conveyors, the introducers or feeding system located right at the entrance of the conveyor consist of a pneumatic system, which feeds and introduces carts into the conveyor, so that a cart is provided for each pusher on the conveyor.

That is, the introducers are placed on the overhead lines and are used to introduce hooks one by one in an overhead track or to establish the connections between different sections until the line is deployed across the entire industry along its different processes. They are composed of a section of rail movable by means of a pneumatic piston, a pneumatic valve for its operation, two limit switches and a guide with nylon bushings. They are usually made of hot-dip galvanised F-114 steel for installation on both double-rail and tubular overhead tracks.

Reviewing the state of the art regarding related inventions, the following are provided, identified by publication number and title, respectively:
- ES2282011, "Carriage for transporting ham hangers in drying rooms".
- ES2317767 B1, "Articulated carriage for transporting ham hangers in drying rooms".
- ES2455595 T3, "Transport tray and manufacturing facility for food products comprising such trays".
- WO2020165475, "Dual feed device for an automated overhead ham or pig conveyor".

Although these are proposals related to improvements to be applied to automated overhead transport systems used in the meat industry, they do not propose simple solutions to double the transport capacity of the line by using the existing infrastructure. Only the latest proposal by the same inventor of the present invention includes a proposal aimed at doubling the transport capacity of the line, which allows meat production to be increased without the need for reforms to the overhead transport system, being easily implementable without requiring any work.

However, the "Device for dual dosing in an automated overhead conveyor of the meat industry ending in two independent hooks" contributes, with respect to the state of the art, specifically with respect to the aforementioned protection of the same inventor, a new design in the introducers, making use of two lower extensions as equal hooks separated by a small distance that provides greater comfort in its loading, unloading and handling operation as well as greater structural solidity of the associated assembly with greater independence in the movement of each ham or pig by each hook and its associated inertial forces.

### EXPLANATION OF THE INVENTION

By way of explanation of the invention, the "Device for dual dosing in an automated overhead conveyor of the meat industry ending in two independent hooks" is applied in the introducers or feeding system located at the entrance of a conveyor or between two consecutive conveyors, by adapting its conventional hydraulic drive arm provided with angular movement around a rotation axis located at one of its ends while the opposite end drags the gambrels between the two sections of the transport line to be connected at the programmed rate, consisting of doubling its load-bearing capacity by means of two lower extensions from a common upper end, in the form of equal and parallel hooks although separated by a small distance, in order to vertically drag two gambrels of product instead of only one for each cycle, guaranteeing that the two gambrels are located thereon in a single cycle and providing it with structural solidity as a whole and independently for each of the two hooks, in order to drag the two gambrels without collapsing.

### DESCRIPTION OF THE FIGURES

To complement this description and in order to assist in a better understanding of the characteristics of the invention, in accordance with a preferred example of its practical implementation, a set of drawings is included as an integral part of the said description, in which, for illustrative and non-limiting purposes, the following has been depicted:
Figure 1. Main perspective view of two conveyor tracks arranged for continuity using the "Device for dual dosing in an automated overhead conveyor of the meat industry ending in two independent hooks."
Figure 2. Main elevation view of a box to which the "Device for dual dosing in an automated overhead conveyor of the meat industry ending in two independent hooks" is attached at its upper end.
Figure 3. Main perspective view of "Device for dual dosing in an automated overhead conveyor of the meat industry ending in two independent hooks."
Figure 4. Main elevation view of "Device for dual dosing in an automated overhead conveyor of the meat industry ending in two independent hooks" to view its lower extensions as equal and parallel hooks, although separated by a small distance.
Figure 5. Alternative elevation view of "Device for dual dosing in an automated overhead conveyor of the meat industry ending in two independent hooks" to view its lower extensions as equal and parallel hooks, although separated by a small distance.

The following constituent elements can be highlighted in the figures outlined above:
1. Overhead conveyor track in first section.
2. Overhead conveyor track in second section.
3. introducer box.
4. Pneumatic piston.
5. Connection ball joint.
6. Pusher.
7. Chain gambrel.
8. Piece object of the invention.
9. 2" tubular track.

### EXAMPLE OF PREFERRED EMBODIMENT

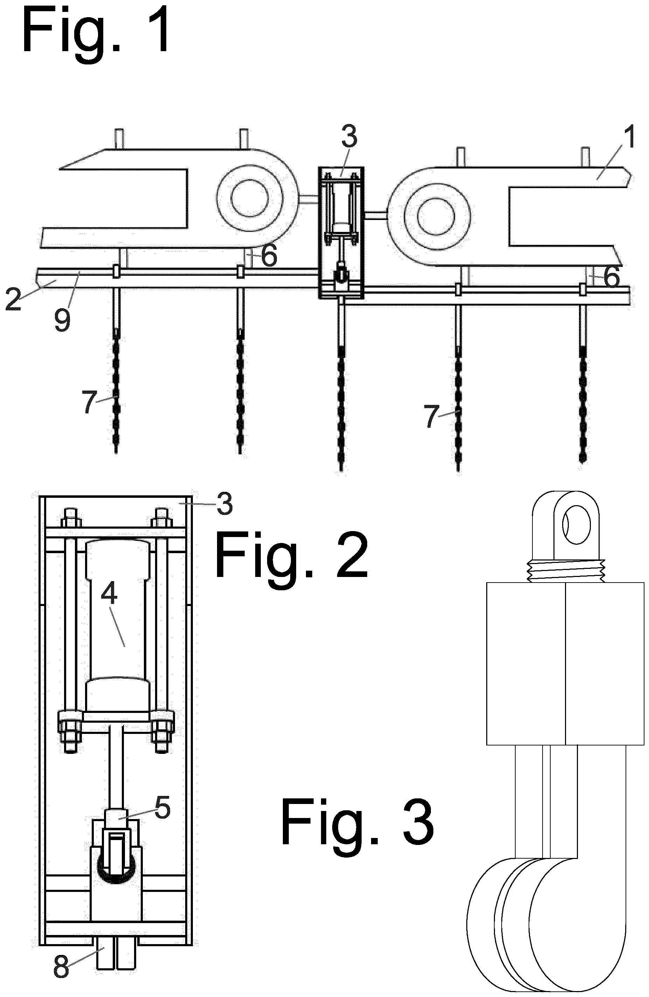

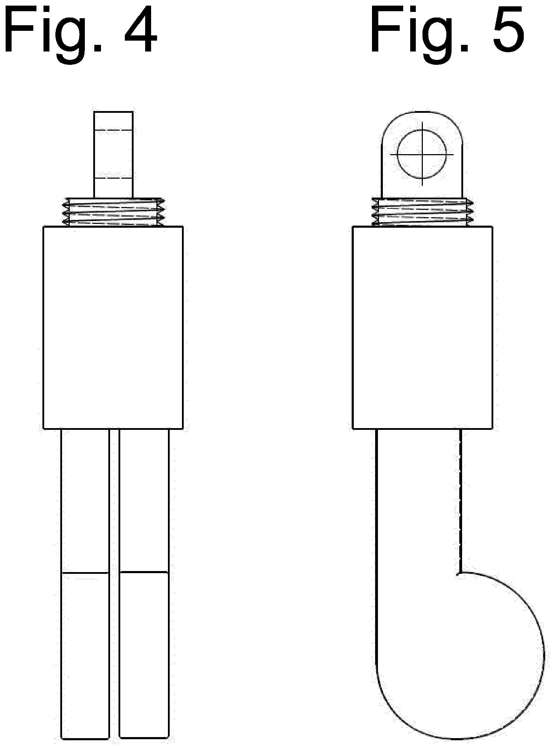

In a preferred embodiment, the "Device for dual dosing in an automated overhead conveyor of the meat industry ending in two independent hooks," as seen in Figures 1-5, can be integrated into a slaughterhouse, aisle and chamber conveyor that is limited to pushing each chain gambrel (4), arranged by means of the composition of several conveyors (1-2) in order to complete the overhead and automated route between the different slaughterhouse and cutting rooms of the industry, making use of the introducer boxes (3) to resolve the discontinuity between the two continuous conveyors (1-2) as shown in Figures 1-2. Thus, as shown in Figure 2, the introducer box (3) houses the piece object of the invention (8) designed to make contact with each gambrel (7) to which it conveys the desired movement by the effect of a pneumatic piston (4) ending in a connection ball joint (5) to the device object of the invention (8).

More specifically, the aforementioned piece object of invention (8) as shown in Figures 3-5, has been carried out according to two lower extensions in the form of equal and parallel hooks although separated by a distance of between one and five millimetres, conceived as the finishing piece of the introducer box (3), the mission of which is to collect by its lower end two gambrels (7) of the overhead conveyor track in the first section (1) to drag and position them in the overhead conveyor track in the second section (2), where the corresponding pusher (6) will provide continuity of movement thereon.

These conveyors (1-2) can be adapted to any type of track or layout and are made up of UPN profiles in F-111 steel or similar, receiving a subsequent galvanised surface treatment.

The traction is carried out by direct drive with a planetary gear motor directly attached to the shaft, with a power of 1.5 kW, so that the corresponding speed can be achieved. The drive shafts are made of F-125, ensuring sufficient resistance for their use. All auxiliary drive elements, such as crowns, bushings, etc., are made of F-114. Like the conveyor frame, all elements made of carbon steel will have a subsequent galvanisation surface treatment.

The track is tensioned by an elastic cylinder. The cylinder is operated by compressed air at a pressure of 4 bars.

The track used can be of the 4" forged X-458 type and is guided by UPN sections using polyethylene wheels from which the pushers (6) hang. Therein, for each conveyor, both the drive wheel, the tension wheel and eight return wheels can contain hardened teeth. Regarding the speed of the tracks, they can be designed based on the equipped gearbox and the variations of the control panel.

Just below the track and equidistant therefrom, a 2" tubular track (9) is installed, on which each of the two chain gambrels (7), from which the corresponding pieces to be transported hang, moves horizontally due to the dragging motion of each pusher (6) attached to the track.

Regarding its mode of operation, when activating the overhead track:
1. A pusher (6) gives a signal to one of the two limit switches to activate the pneumatic cylinder (5), which transfers to the device object of the invention (8) a movement from its starting position where two gambrels (7) have already been located until they move vertically from the end of the conveyor in the first section (1), to the start of the conveyor in the second section (2), where the corresponding pusher (6) drags it in its natural passage through its sweeping area.
2. The pusher (3), after travelling a section in the conveyor track (2), gives a signal to the other limit switch to activate the pneumatic cylinder (4), returning the device object of the invention (8), which provides continuity to the rail, back to its initial position as the end of the conveyor in the first section (1), waiting to receive two new gambrels (7).
3. This cycle is repeated indefinitely until the overhead track is stopped.

Obviously, it is necessary to adapt the flow of the transport line in all its interactions with the outside in order to double its capacity both in terms of loading, handling in motion and unloading thereof, as well as automatic regulation by adjusting the limit switches to the load of two pieces, as well as the structural solidity of the elements that are affected by doubling the load-bearing capacity of the line.

This description is considered sufficient for an expert in the field to understand the scope of the invention and the advantages to be derived therefrom in its application to any piece to be transported in the meat industry, adapting to the configuration of the hooks or gambrels themselves. The materials used, the shapes of the different elements described, its size and dimensions or the technology that implements it pneumatically or hydraulically, may vary as long as this does not entail an alteration in the essence of the invention. The terms in which the specification has been described must be understood in a broad and non-limiting sense.

## Claims

1. Device for dual dosing in an automated overhead conveyor of the meat industry ending in two independent hooks, usually integrated into the introducers or feeding system located at the entrance of a conveyor or between two consecutive conveyors, by adapting its conventional hydraulic drive arm provided with angular movement around a rotation axis located at one of its ends while the opposite end drags the gambrels between the two sections of the transport line to be connected at the programmed rhythm, **consisting** of two lower extensions, from a common upper end, in the form of equal and parallel hooks although separated by a small distance, designed to accommodate and drag two gambrels in a single cycle.

## Amended claims

### Amended claims under Art. 19.1 PCT

1. Device for dual dosing in an automated overhead conveyor of the meat industry ending in two independent hooks, designed for integration in the introducers or feeding system located at the entrance of a conveyor or between two consecutive conveyors, by adapting its hydraulic drive arm provided with angular movement around a rotation axis located at one of its ends while the opposite end drags the gambrels between the two sections of the transport line to be connected, **consisting** of two lower extensions, from a common upper end, in the form of equal and parallel hooks although separated by a distance of between one and five millimetres, designed to accommodate and drag two gambrels in a single cycle.
